# EUROPEAN PATENT APPLICATION

(11) **EP 0 605 249 A1**
(43) Date of publication of application: **06.07.1994**
(21) Application number: 93310587.6
(22) Date of filing: 29.12.1993
(51) Int. Cl.: F01N 3/20, F01N 3/28, F01N 3/30

(54) **Engine exhaust system**

(30) Priority: 31.12.1992 GB 9227157
(71) Applicant: FORD MOTOR COMPANY LIMITED, Brentwood, Essex CM13 3BW (GB); FORD-WERKE AKTIENGESELLSCHAFT, D-50735 Köln (DE); FORD FRANCE S. A., F-92506 Rueil-Malmaison Cédex (FR)
(72) Inventor: Ma, Thomas Tsoi-Hei, South Woodham Ferrers, Essex CM3 5YB (GB)
(74) Representative: Messulam, Alec Moses

(57) **Abstract**

An engine exhaust system comprises a catalytic converter 12a, 12b and an afterburner 14 arranged upstream of at least a section 12b of the catalytic converter for rapidly heating the catalytic converter to its light off temperature when the engine is first started from cold. An exhaust emissions reservoir 30 is connected by supply and return passages 32, 34 to points upstream of the afterburner 14, and a source of air 18 is provided for diverting the exhaust gases from the engine into the supply passage 32 leading to the reservoir 30 during engine cranking.

## Description

### Field of the invention

The present invention relates to an engine exhaust system comprising a catalytic converter and an afterburner arranged upstream of at least one section of the catalytic converter for rapidly heating the catalytic converter to its light off temperature when the engine is first started from cold.

### Background of the invention

Catalytic converter do not function adequately to purify exhaust gases until they have reached a certain temperature, termed the light off temperature. For this reason, they achieve little during cold starts, when hydrocarbon and carbon monoxide emissions are at their worst. To overcome this problem, it is has previously be proposed to heat a catalytic converter by means of an afterburner in the exhaust system. The afterburner burns a mixture of hydrogen, carbon monoxide and hydrocarbons present in the exhaust gases and oxygen from additional air introduced directly into the exhaust system without passing through the engine cylinders.

To achieve the concentration of flammable gases, in particular hydrogen, in the exhaust gases to enable cold combustion in the afterburner, an extremely rich mixture must be supplied to the engine cylinders. This can cause a problem in that the excess fuel can wet the spark plug electrodes and thereby prevent the engine from firing if it is introduced too soon into the combustion chambers. For this reason, the excess fuel is delayed until the engine has fired and is not applied while the engine is being cranked. The exhaust emissions during the engine cranking are therefore purified neither by the afterburner nor by the catalytic converter and are discharged to atmosphere to contribute to environmental pollution.

### Object of the invention

The present therefore seeks to provide an exhaust system of the type having a catalytic converter and an afterburner, in which problem caused by exhaust emissions during initial cranking is mitigated.

### Summary of the invention

According to the present invention, an engine exhaust system comprising a catalytic converter and an afterburner arranged upstream of at least a section of the catalytic converter for rapidly heating the catalytic converter to its light off temperature when the engine is first started from cold, is provided with an exhaust emissions reservoir connected by supply and return passages to points upstream of the afterburner, and a source of air for diverting the exhaust gases from the engine into the supply passage leading to the reservoir during engine cranking.

The source of air for diverting the exhaust gases may conveniently be the source of additional air for the afterburner. The air flow rate from this source will be significant as compared to the rate of flow of unburnt gases from the engine during cranking.

The reservoir may simply be a large volume chamber for temporarily storing the unburnt gases from a few engine cycles until the afterburner has fired, whereupon the contents of the reservoir can be released back into the exhaust system through the return passage upstream of the afterburner.

Alternatively, the reservoir may include a chemical substance, such as active carbon, to adsorb the noxious gases. In this cases, the adsorbed gases will be released when the exhaust system gradually warms up and brings the chemical substance to a certain temperature and when a small flow circulation is established through the reservoir which slowly purges the hydrocarbons back into the exhaust system upstream of the catalytic converter which then converts it along with the emissions from the main exhaust flow.

If active carbon is used, it is important to prevent it from overheating and this may be simply achieved by making the connection passage of sufficient length to dissipate heat from the exhaust gases before it reaches the reservoir.

Hydrocarbon traps have previously been proposed to store the unburnt hydrocarbons for several minutes of engine running from start. Such traps are located downstream of the catalytic converter, are of very large volume and must be connected to the exhaust system by mechanical flow diversion valves. These traps are also purged by a controlled flow of air or exhaust gases back to the intake system of the engine.

By contrast the reservoir of the invention needs only to store the exhaust gases from a few operating cycles, is arranged upstream of the catalytic converter and is purged into the exhaust rather than the intake system. Furthermore no special mechanical valves required to divert the air flow as the air jet from the source of additional air is initially higher that the engine cranking exhaust flow and is effective in diverting the gases into the reservoir. However, once the engine has fired and starts turning faster, the air jet will no longer be effective to divert the main exhaust stream but will mix with the gases to produce an mixture that can be ignited in the afterburner. As the main exhaust flow is established, a small pressure drop will be developed between the supply and return passages leading to the reservoir. This pressure drop is enough to cause a small flow circulation capable of purging the reservoir without causing overheating under normal operating conditions.

### Brief description of the drawings

The invention will now be described further, by way of example, with reference to the accompanying drawings, in which:
Figure 1 is a diagrammatic representation of an exhaust system in accordance with a first embodiment of the invention, and
Figure 2 is a similar diagrammatic representation of an exhaust system in accordance with a second embodiment of the invention.

### Detailed description of the preferred embodiments

In both figures of the drawing, an exhaust down pipe 10 leads from an engine (not shown) to a combined catalytic converter and afterburner 12 having two bricks 12a and 12b. containing a three way catalyst, separated from one another by an afterburner chamber 14 that contains a spark igniter 16. A source of pressurised air (not shown) is connected by a tube 18 to a point upstream of the combined catalytic converter and afterburner 12. As so far described, the illustrated exhaust systems are known.

When the engine is running normally and the catalytic converter bricks 12a and 12b are above their light off temperature, the three way catalyst allows carbon monoxide, oxides of nitrogen oxide, hydrocarbons and oxygen to react with one another to complete the combustion process. In this way, the carbon monoxide is oxidises further to form carbon dioxide, the oxides of nitrogen are reduced to form nitrogen and the hydrocarbons are burnt and converted to carbon dioxide and water. For clean emissions, the engine is required to run with a fuel to air ratio close to stoichiometry (λ). During this normal operation, the afterburner is not brought into operation.

Prior to the catalyst reaching its light off temperature, the above catalytic reaction does not take place and the afterburner is used to minimise the problem of emissions during this time. Shortly after the engine has first fired, an excess of fuel is supplied to the engine (possibly as much as 2λ) and the source of pressurised air is operated to introduce air into the exhaust system while bypassing the combustion chambers of the engine. This combination of actions results in the mixture in the afterburner chamber 14 between the bricks 12a and 12b being ignitable from cold and capable of sustaining steady combustion. When the spark igniter 16 is fired (this may be a continuously firing spark plug or a glow plug), the gases burn in the afterburner chamber 14 and rapidly raise the temperature of the front face of the second brick 12b. Once this has occurred, the afterburner is switched off by returning to a more usual mixture strength and because the catalytic reaction which is thereby commenced is exothermic, the remainder of the catalyst is brought to its light off temperature as the hot region propagates down the second brick 12b. Eventually, the first brick 12a is also brought to its light off temperature by the exhaust gases.

The afterburner itself reduces emissions by burning the exhaust hydrogen, carbon monoxide and hydrocarbons in the additional air and also brings about almost immediate operation of the catalyst.

The present invention is concerned with the few cycles when the engine is being cranked with a moderately rich mixture (for example 1.3λ) which is not rich enough for the afterburner to be fired. The exhaust gases from these few cycles, which are rich in hydrocarbons, are normally allowed to escape to atmosphere but in the present are taken to store these gases until the afterburner can be brought into operation.

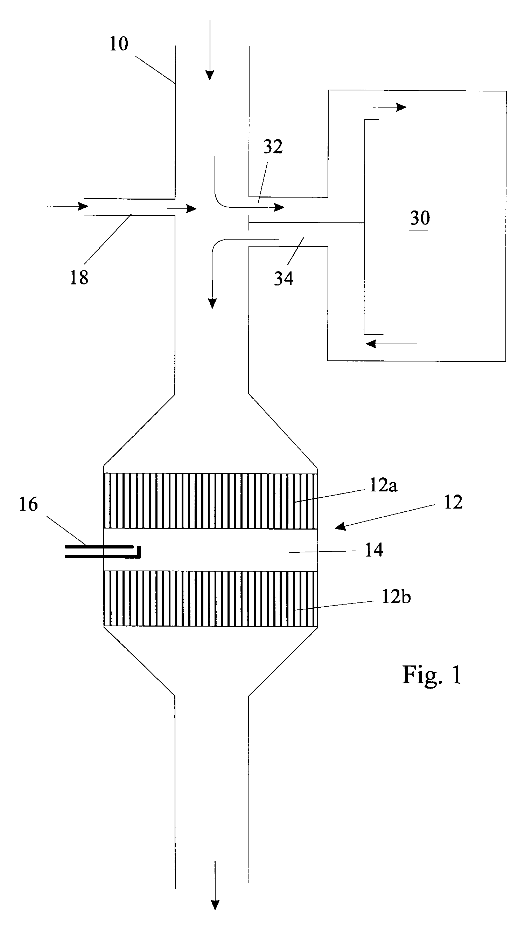

In the embodiment of Figure 1, a reservoir chamber 30 is provided which is connected to the down pipe 10 by a supply passage 32 directly facing the tube 18 for supplying pressurised air into the exhaust system and a return passage 34. During cranking, the flow rate of the exhaust gases is relatively small and the exhaust gases will be diverted by the air jet into the chamber 30. Subsequently, after the afterburner has commenced operation, the gases will be returned to the exhaust system through the return passage 34 but by that time they will be cleaned by the catalytic converter before being discharged into the atmosphere. Thus the air jet will act as a flow diverter when the engine is being cranked and will act to mix the additional air with the exhaust gases after the engine has fired.

Because the ends of the supply and return passages are close to one another, there will be only a small pressure drop across them in the down pipe 10 during normal engine operation and this is sufficient to create a small recirculating flow through the reservoir to purge its content slowly back into the exhaust system, without causing overheating of the reservoir.

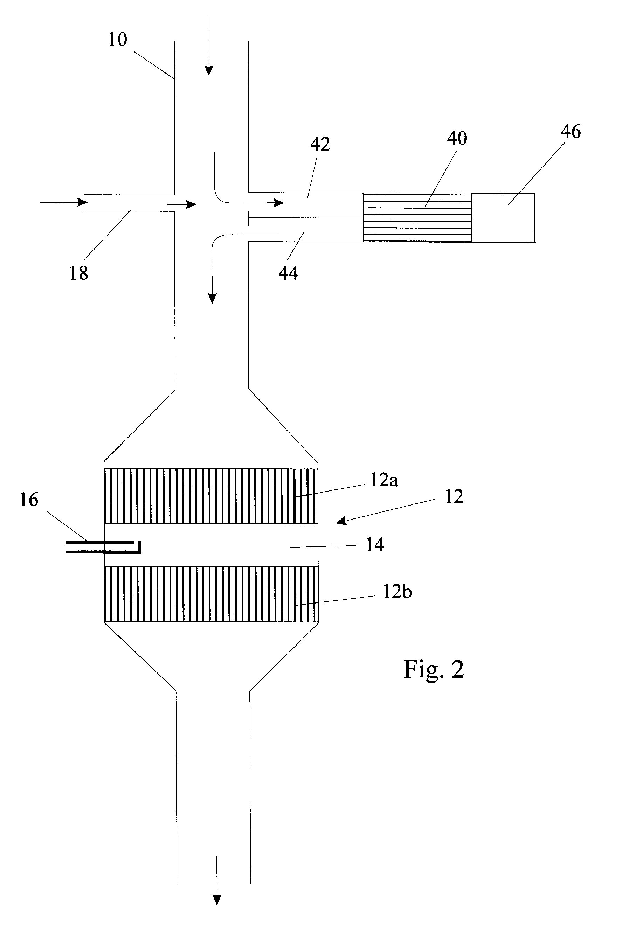

The embodiment of Figure 2 operates on the same principle but a smaller reservoir 40 is used containing a chemical substance, such as active carbon, for adsorbing the harmful content of the exhaust emissions. This allows the reservoir to have a smaller volume, making it easier to package, but longer supply and return passages 42 and 44, respectively, are required to prevent the active carbon from being overheated during normal operation.

The active carbon is made in the form of a matrix or honeycomb of parallel ducts, similar to a catalyst brick, to give a large surface area. The gases flow from the supply passage 42 through part of the matrix into a chamber 46 and return through the passage 44 after passing through the other part of the matrix.

In the second embodiment, the active carbon is purged and releases the adsorbed emission gases when the exhaust system gradually warms up and brings the reservoir to a certain high temperature and as the flow circulation described above is set up through the reservoir. By this time, the catalytic converter can cope with the discharged gases along with the remainder of the emissions from the engine. When the engine again cools down, the carbon will again be activated to store the noxious emissions until the catalytic converter or afterburner has commenced operation.

## Claims

1. An engine exhaust system comprising a catalytic converter (12) and an afterburner (14) arranged upstream of at least a section (12b) of the catalytic converter (12) for rapidly heating the catalytic converter to its light off temperature when the engine is first started from cold, characterised in that an exhaust emissions reservoir (30,40) is connected by supply (32,42) and return (34,44) passages to points upstream of the afterburner (12), and a source of air (18) is provided for diverting the exhaust gases from the engine into the supply passage (32,42) leading to the reservoir (30,40) during engine cranking.

2. An engine exhaust system as claimed in claim 1, wherein the source of air for diverting the exhaust gases during cranking also serves to mix additional air with the exhaust gases for the afterburner after the engine has started.

3. An engine exhaust system as claimed in claim 1 or 2, wherein the reservoir (30) is a large volume chamber.

4. An engine exhaust system as claimed in claim 1 or 2, wherein the reservoir (40) includes a chemical substance, such as active carbon, to adsorb the noxious gases.

5. An engine exhaust system as claimed in claim 4, wherein the supply and return passages connecting the reservoir to the exhaust system upstream of the catalytic converter, are sufficiently long to prevent overheating of the reservoir during normal operation of the engine.

6. An engine exhaust system as claimed in any preceding claim, wherein the ends of the supply and return passages connecting the reservoir to the exhaust system upstream of the catalytic converter are located close to one another so that the pressure drop across them is sufficient to establish a small flow through the reservoir, capable of purging the reservoir without causing overheating.
